# EUROPEAN PATENT APPLICATION

(11) **EP 1 202 255 A2**
(43) Date of publication of application: **02.05.2002**
(21) Application number: 01124968.7
(22) Date of filing: 19.10.2001
(51) Int. Cl.: G11B 7/007, G11B 7/24

(54) **Multi-layer information recording medium and recording apparatus for the same**

(30) Priority: 23.10.2000 JP 2000322187
(71) Applicant: Pioneer Corporation, Meguro-ku, Tokyo (JP)
(72) Inventor: Kuribayashi, Hiroki, Pioneer Corporatoin, Tsurugashima-shi, Saitama 350-2288 (JP)
(74) Representative: Manitz, Finsterwald & Partner GbR

(57) **Abstract**

A stable rewritable multi-layer information recording medium capable of suppressing noises and a recording apparatus for the same. The multi-layer information recording medium is capable of recording/rewriting information, provided with a plurality of recording layers (L1,L2) sequentially layered through spacer layers. Each recording layer is made of a material that changes reflectance upon irradiation of a beam of light, each recording layer is provided with alternately and adjacently aligned information rewritable regions (RWR) and pre-pit regions (PPR) where predetermined information has been written. Average reflectance of the rewritable regions is different from average reflectance of the pre-pits regions. In this construction, the pre-pit regions have recording marks (LMK) that lessen a difference between the average reflectance of the rewritable regions and the average reflectance of the pre-pit regions. The recording apparatus for recording/rewriting information by irradiating a beam of light to a multi-layer information recording medium capable of recording/rewriting information, includes a circuit for generating a recording mark signal for recording a recording mark of a predetermined length in each of the pre-pit regions while the beam of light is irradiated on the pre-pit region.

## Description

### BACKGROUND OF THE INVENTION

### 1. Field of the Invention

The present invention relates to an optical information recording medium, such as an optical disc for recording information on the tracks thereof, and more particularly to a rewritable multi-layer information recording medium provided with a plurality of recording layers layered sequentially through spacer layers so that data can be written into or read out from these recording layers, and to a recording apparatus for the same.

### 2. Description of Related Art

Recently, optical discs are used extensively as means for recording and reproducing data including video data, sound data, computer data, and the like. High-density recordable discs called DVDs (Digital Versatile Discs) have been put into practical use. The DVDs include recording types and reading types in various forms, and one example is an optical disc of a multi-layer structure provided with a plurality of recording layers.

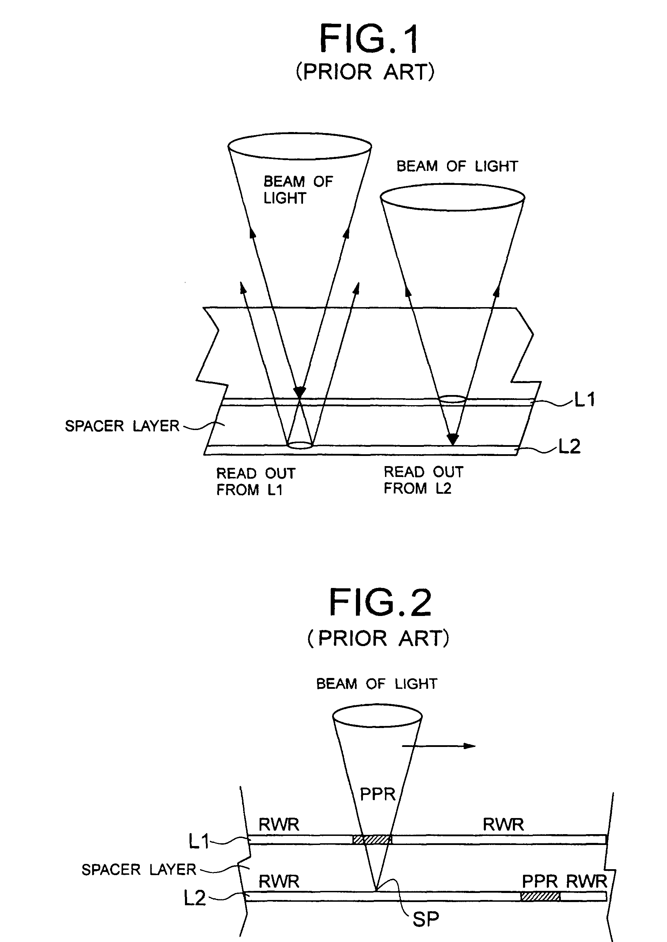

As show in Fig. 1, a read-only doubly-layer disc as one example of the DVDs has a double-layer structure composed of a first recording layer (hereinafter, referred to as the layer 1 as needed) at the closer end to the pick-up as viewed from the reading side and a second recording layer (hereinafter, referred to as the layer 2 as needed) at the farther end (deep side) from the pick-up. The layer 1 is a translucent film to transmit a beam of light, so that a signal can be also read out from the layer 2, and for this reason, the film thickness and materials of the layer 1 have to be selected adequately. The layer 2 is made of a reflection film.

A light transmitting spacer layer is provided between the layer 1 and layer 2 to evenly space apart these recording layers. Because the spacer layer serves as a light path of a beam of reading light, it is made of a material having high transmittance for light at a reading light wavelength and a refractive index near a refractive index of the substrate, such as a UV cured resin material.

With the double-layer disc, by moving a focal point of a beam of reproducing light (hereinafter, referred to as focus jump), a signal can be read out from either the layer 1 or layer 2 through one surface of the disc. Double-layer discs based on this principle and used as reproduce-only discs have been already marketed as DVD-ROMs.

It is necessary for the double-layer DVD-ROM that a signal from the layer 1 and a signal from the layer 2 can be clearly separated from each other, and a signal can be read out from each layer without any deterioration, and for this reason, the thickness of the spacer layer (inter-layer thickness) and the thickness of the substrate are set adequately.

If the spacer layer is sufficiently thick, when focus is achieved on the layer 1, for example, a beam of light irradiated to the layer 2 is defocused and expands to the extent that neither pits nor recording marks are resolved, and therefore, reflection light from the layer 2 is hardly modulated by the pits. Hence, if average reflectance of the layer 2 remains the same, a signal from the layer 1 alone can be read out by extracting high frequency components in a read out signal through a high-pass filter. Likewise, a signal from the layer 2 alone can be read out when focus is achieved on the layer 2.

However, if the spacer layer is made thinner to allow a next-generation type disc to incorporate a plurality of recording layers and thereby to attain a larger recording capacity, when focus is achieved on the layer 1, a beam of light irradiated to the layer 2 does not expand to an appreciable extent. Hence, a signal from the layer 2 leaks into a signal from the layer 1 to some extent, or in the opposite case, a signal from the layer 1 leaks into a signal from the layer 2 to some extent (this leakage of one signal into the other is referred to as inter-layer crosstalk). Hence, there has been a need for a further reduction of noises including the inter-layer crosstalk in an apparatus for performing reproduction by moving relatively with respect to an optical information recording medium of the multi-layer structure.

On the other hand, an optical disc, provided with a single recording layer made of a phase change material with which data can be recorded or erased by a beam of light, has been known as a DVD-RAM with which one can rewrite data as he/she wishes. The recording layer of the DVD-RAM is provided with regions (hereinafter, referred to as rewritable regions as needed) on which data is rewritable, that is, data can be recorded or erased, and with regions (hereinafter, referred to as pre-pit regions as needed) on which a line of emboss pits carrying information, such as addresses and recording timing, are pre-formed.

The following description will discuss recording and reproduction of data on the assumption that the phase change material recording layer structure is applied to a double-layer disc to allow the DVD-RAM to incorporate a plurality of recording layers and thereby to attain a larger recording capacity. For example, assume that, as shown in Fig. 2, each of the layer 1 and layer 2 is formed as a phase change material recording layer, and is provided with pre-pit regions PPR and rewritable regions RWR aligned alternately on tracks, whereby reproduction (recording) is performed as a beam of light passes through the rewritable region, pre-pit region, rewritable region, and pre-pit region in succession.

Firstly, the following description will discuss inter-layer leakage of one signal into the other in the case of reproduction. In a double-layer disc before recording, average reflectance of the pre-pit regions PPR is higher than that of the rewritable regions RWR in each recording layer. After data is recorded, non-recorded (crystal) portions and recording marks (amorphous) reside in the rewritable regions at an approximately fifty-fifty ratio. In the case where no recording marks are recorded in the pre-pits regions, the entire pre-pit regions remain in a non-recorded (crystal) state, and because the non-recorded (crystal) portions have higher reflectance than the recording marks (amorphous) portions, average reflectance of the pre-pits regions PPR is higher than that of the rewritable regions RWR.

As shown in Fig. 2, in the case where the position of the pre-pits regions PPR on the layer 1 is shifted from the position of the pre-pits regions PPR on the layer 2, that is, in the case where the pre-pit regions PPR on the layer 1 are superimposed on the rewritable regions RWR on the layer 2, at the time of reproduction from the rewritable region RWR on the layer 2, reflection light from the layer 1 that leaks into reflection light from the layer 2 and is superimposed thereon has different intensity depending on whether the reflection light is from the pre-pit region PPR or from the rewritable region RWR. This causes noises and poses a problem that a signal cannot be reproduced precisely from the layer 2.

At the time of reproduction from the layer 1, most of unwanted reflection light from the layer 2 caused by the above-discussed change in reflectance is defocused at an optical system in the return path. Hence, a quantity of the reflection light received by the photo-detector in the pick-up is small, and so is the amplitude of noises. However, besides the foregoing point, a change in transmittance of the layer 1 needs consideration. That is, a change in quantity of a beam of light passing through the pre-pit region PPR on the layer 1 poses a significant problem in the case of recording in (and reproduction from) the layer 2.

After data is recorded, the non-recorded (crystal) state (that is, spaces between the recording marks) and the recording marks (amorphous) state reside in the rewritable regions at an approximately fifty-fifty ratio. On the other hand, the pre-pits regions remain in the non-recorded (crystal) state. Because the non-recorded (crystal) portions have lower transmittance than the recording marks (amorphous) portions, the pre-pits regions on the layer 1 that remain in the non-recorded (crystal) state as a whole have lower average transmittance than the rewritable regions on the layer 1 after data is recorded.

In the case shown in Fig. 2, at the time of recording in (reproduction from) the rewritable regions RWR on the layer 2, the transmittance of the layer 1 differs depending on whether the light passes through the pre-pit region PPR or through the rewritable region RWR on the layer 1. Hence, a quantity of light passing through the layer 1 and reaching the layer 2 is reduced, which makes precise recording impossible. When the reproduction in this case is concerned, not only a quantity of light reaching the layer 2 is reduced in the incoming path, but also a quantity of light reflected from the layer 2 and passing through the layer 1 again is reduced in the return path. This further increases the inter-layer crosstalk from the layer 1 at the time of reproduction from the layer 2, thereby making it difficult to reproduce a signal from the layer 2 precisely.

### OBJECT AND SUMMARY OF THE INVENTION

The present invention has been made to solve the above problems, and therefore, it is an object of the invention to provide a rewritable multi-layer information recording medium (hereinafter, simply referred to as a multi-layer disc) and a recording apparatus, both of which make it possible to write data into or read out data from each recording layer in a stable manner by suppressing noises.

A multi-layer information recording medium of the present invention is a multi-layer information recording medium capable of recording/rewriting information, provided with a plurality of recording layers sequentially layered between which spacer layers lie, each recording layer being made of a material that changes reflectance upon irradiation of a beam of light and thereby being capable of recording information as a change in reflectance, each recording layer being provided with alternately and adjacently aligned information rewritable regions and pre-pit regions where predetermined information has been written, average reflectance of the rewritable regions being different from average reflectance of the pre-pits regions. In this construction, the pre-pit regions have recording marks that lessen a difference between the average reflectance of the rewritable regions and the average reflectance of the pre-pit regions.

In the multi-layer information recording medium according to the present invention, each of the pre-pit regions may be composed of a mirror portion and a portion provided with emboss pits.

In the multi-layer information recording medium according to the present invention, the emboss pits may carry address information.

In the multi-layer information recording medium according to the present invention, each of the recording layers may include land tracks and groove tracks.

In the multi-layer information recording medium according to the present invention, each of the recording layers may include a medium layer made of a phase change material.

In the multi-layer information recording medium according to the present invention, the multi-layer information recording medium may have a disc shape and the pre-pits regions may be provided in a spokes-wise fashion from a center of the disc.

In the multi-layer information recording medium according to the present invention, the pre-pit regions may be provided periodically in a disc tangential direction.

In the multi-layer information recording medium according to the present invention, a line of emboss pits in each of adjacent tracks may be provided at a different position in a disc tangential direction.

In the multi-layer information recording medium according to the present invention, each of the recording marks recorded in the pre-pits regions may be a non-modulated continuous recording mark.

A recording apparatus of the present invention is a recording apparatus for recording/rewriting information by irradiating a beam of light to a multi-layer information recording medium capable of recording/rewriting information and provided with a plurality of recording layers sequentially layered between which spacer layers lie, wherein each recording layer is made of a material that changes reflectance upon irradiation of a beam of light and thereby is capable of recording information as a change in reflectance, each recording layer is provided with alternately and adjacently aligned information rewritable regions and pre-pit regions where predetermined information has been written, and average reflectance of the rewritable regions is different from average reflectance of the pre-pits regions. The apparatus includes a circuit for generating a recording mark signal for recording a recording mark of a predetermined length in each of the pre-pit regions while the beam of light is irradiated on the pre-pit region.

The recording apparatus according to the present invention may further include a circuit for detecting the rewritable regions and the pre-pit regions.

The recording apparatus according to the present invention may further include a circuit for detecting a portion that makes the average reflectance of the pre-pit regions different from the average reflectance of the rewritable regions.

The recording apparatus according to the present invention may further include: a circuit for detecting the recording marks already recorded in the pre-pit regions; and a circuit for, when no recorded recording marks are detected, controlling an optical pick-up to record the recording marks in the pre-pit regions, and when the recorded recording marks are detected, for controlling the optical pick-up not to over-write the recording marks in the pre-pit regions.

The recording apparatus according to the present invention features recording of a non-modulated continuous recording mark in a portion having a higher reflectance than the average reflectance of the pre-pit regions.

### BRIEF DESCRIPTION OF THE DRAWINGS

Fig. 1 is a schematic cross sectional view of a double-layer DVD;
Fig. 2 is a schematic cross sectional view of a double-layer rewritable disc;
Fig. 3 is a plan view of a CAV system double-layer disc as an example multi-layer disc of the present invention;
Fig. 4 is a plan view of a zone CAV or CLV system multi-layer disc of the present invention;
Fig. 5 is an enlarged partial plan view of a recording layer of the multi-layer disc of the present invention;
Fig. 6 is a schematic enlarged perspective view of a double-layer disc of the present invention;
Fig. 7 is a schematic view explaining an arrangement of a recording and reproducing apparatus of the present invention;
Fig. 8 is a block diagram schematically showing a recording control circuit in the recording and reproducing apparatus of the present invention;
Fig. 9 is a block diagram schematically showing another recording control circuit in the recording and reproducing apparatus of the present invention;
Figs. 10A and 10B are schematic enlarged perspective views explaining an operation of the double-layer disc of the present invention;
Fig. 11 is a diagram showing operation waveforms from land tracks on a layer 1 in the double-layer disc of the present invention;
Fig. 12 is a diagram showing operation waveforms from groove tracks on the layer 1 in the double-layer disc of the present invention;
Fig. 13 is a diagram showing operation waveforms when a signal recorded in rewritable regions on a layer 2 is reproduced after recording in the layer 1 is performed in the double-layer disc of the present invention;
Figs. 14A and 14B are schematic enlarged perspective views explaining an operation of a double-layer disc of a comparative example;
Fig. 15 is a diagram showing operation waveforms from land tracks on a layer 1 in the double-layer disc of the comparative example;
Fig. 16 is a diagram showing operation waveforms from groove tracks on the layer 1 in the double-layer disc of the comparative example; and
Fig. 17 is a diagram showing operation waveforms when a signal recorded in rewritable regions on a layer 2 is reproduced after recording in the layer 1 is performed in the double-layer disc of the comparative example.

### DETAILED DESCRIPTION OF THE PREFERRED EMBODIMENTS

The following description will describe embodiments of the present invention with reference to the accompanying drawings.

### (Multi-layer disc)

An example multi-layer disc is of a double-layer structure having two recording layers L1 and L2 as shown in Fig. 2. The following description will describe a double-layer disc as an example, but it should be appreciated that the number of the layered recording layers is not especially limited in the present invention. Each of the recording layers L1 and L2 is a medium layer made of a phase change material, such as Ag-In-Sb-Te, and they are sandwiched by glass protecting layers made of, for example ZnS-SiO₂, to form a lamination structure.

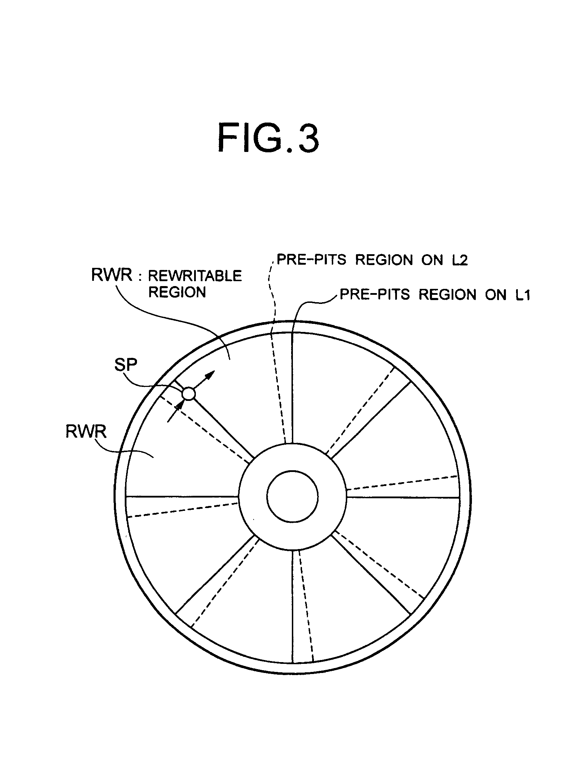

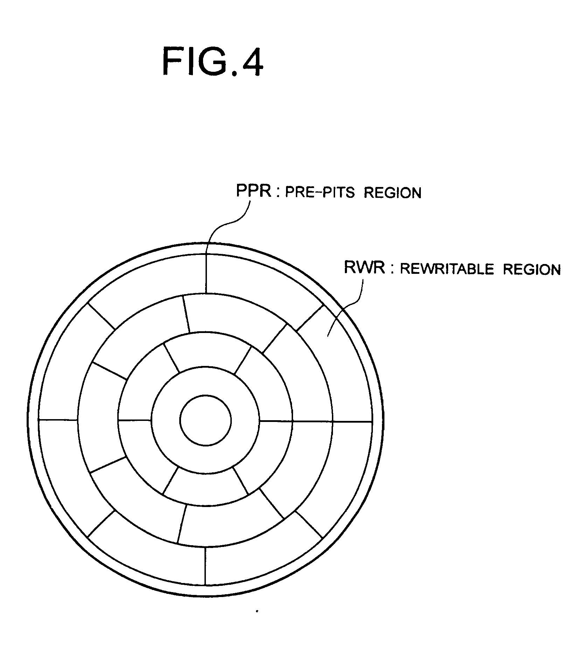

The multi-layer disc is, for example, as shown in Fig. 3, a double-layer disc of a CAV (Constant Angular Velocity) system, in which pre-pit regions PPR in each of the layers L1 and L2 are formed radially at a constant angle from the center in a spokes-wise fashion, so that a plurality of rewritable regions RWR are defined. The pre-pit regions on the layer L1 and those on the layer L2 may be formed at the same position or shifted from each other so as not to be superimposed. The pre-pits regions PPR are formed in a spokes-wise fashion from the center in the CAV system multi-layer disc, but in a CLV (Constant Linear Velocity) system multi-layer disc, they are formed periodically in the disc tangential direction, so that they can be formed evenly or almost evenly across the multi-layer disc. Further, in a multi-layer disc of a zone CAV or CLV system as a combination of the CAV and CLV systems, as shown in Fig. 4, sectors of the rewritable regions RWR are defined by the pre-pit regions PPR serving as the boundaries.

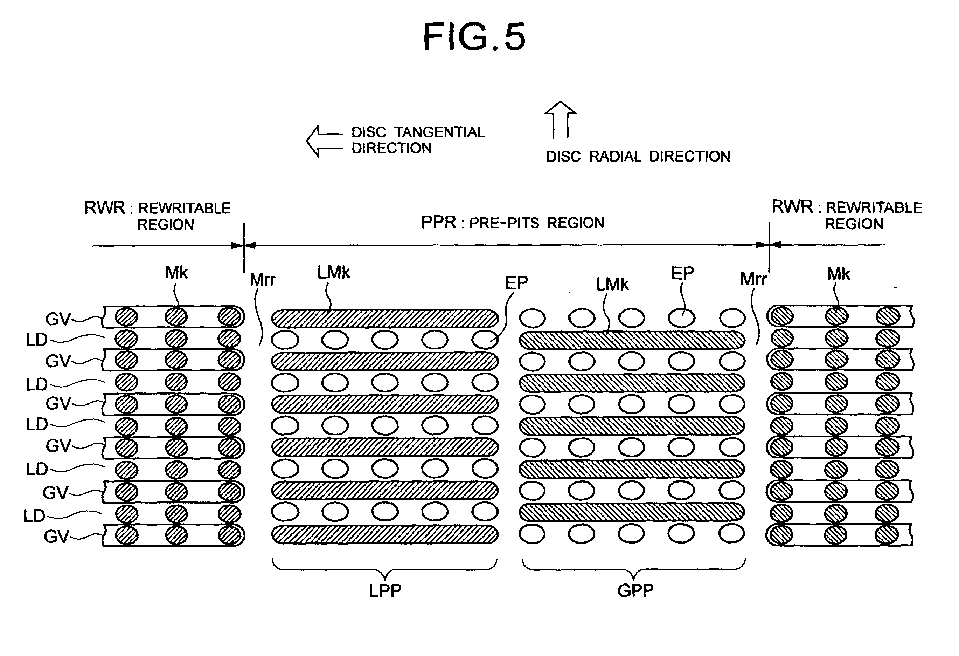

As shown in Fig. 5, in each recording layer of the multi-layer disc, the rewritable regions RWR where data can be recorded or erased, and the pre-pits regions PPR where information including addresses and recording timing are recorded in the form of a plurality of emboss pits EP are aligned alternately along the tracks. Also, each recording layer of the multi-layer disc is provided with a spiral or concentric convex groove tracks GV and a spiral or concentric concave land tracks LD pre-formed alternately. In Fig. 5, each groove track GV is illustrated linearly, but it may be wobbled at a frequency corresponding to the number of revolutions of the multi-layer disc for practical use. Information is recorded in at least one of the groove tracks GV and land tracks LD.

In order to record data into the multi-layer disc, the pre-pits regions PPR and rewritable regions RWR in the recording layers are scanned by a beam of reproducing light (reading power) with low intensity to detect land pre-pits LPP and groove pre-pits GPP in the pre-pits regions, whereby the position of a track where data is to be recorded is determined. Meanwhile, a beam of recording light (writing power) with high intensity and modulated according to the data is irradiated to achieve a focus on the rewritable regions on that track. Here, portions irradiated by the beam of recording light is heated and cooled abruptly, so that the medium layer is turned into an amorphous state, and for example, recording marks Mk with low reflectance, which is different from the reflectance of the surrounding crystal, are formed on the land and groove track portions shown in Fig. 5. In short, user data is recorded in the form of the recording marks (in the amorphous state) in the non-recorded (crystal) portions within the rewritable regions.

The recording marks Mk are read out, that is, the data is reproduced, by irradiating a beam of reproducing light with low intensity to the pre-pit regions PPR and rewritable regions RWR. The recording marks Mk are erased by irradiating a beam of light with medium intensity to the rewritable regions, so that the rewritable regions are heated and cooled gradually, and thereby restored into the crystal state with high reflectance.

Mirror portions Mrr are pre-formed in the pre-pit regions PPR in each recording layer of the multi-layer disc, and a line of the emboss pits EP are pre-formed as the land pre-pits LPP on a part of the land tracks LD extended onto the mirror portions Mrr. Likewise, a line of the emboss pits EP are pre-formed as the groove pre-pits GPP on a part of the groove tracks GV extended onto the mirror portions Mrr. The mirror portions Mrr are used in, for example, the offset signal detection or the disc-tilt detection when the tracking servo control is performed by the push-pull method.

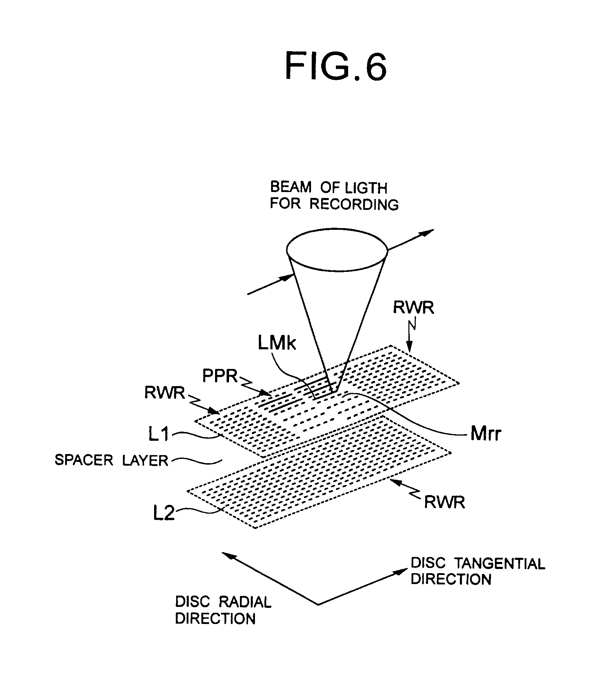

In the double-layer disc of the present embodiment shown in Fig. 5, recording marks LMk are formed in the pre-pits regions PPR to lessen a difference in average reflectance between the pre-pit regions PPR and the rewritable regions RWR. More specifically, in the present embodiment, as shown in Fig. 6, a recording and reproducing apparatus described below records the long recording marks LMk in the mirror portions Mrr of the pre-pit regions PPR on the layer L1 in the double-layer disc arranged so that the pre-pits regions PPR on the layer L1 are not superimposed on those on the layer L2, whereby an approximately fifty-to-fifty area ratio is achieved between the non-recorded (crystal) portions and the recording marks (amorphous) in the pre-pit regions PPR and rewritable regions RWR. Consequently, the mirror portions in the pre-pit regions on the layer 1 are turned into the recorded (amorphous) state, and average transmittance (reflectance) of the pre-pits regions and average transmittance (reflectance) of the rewritable regions (after data is recorded) on the layer 1 are almost equal to each other, thereby reducing a change in quantity of reflected return light passing through the layer 1 at the time of reproduction from the layer 2.

Because the recording marks LMk recorded in all the pre-pits regions make little difference in average transmittance or reflectance between the rewritable regions and pre-pit regions in each recording layer, the same effect can be achieved with a double-layer disc in which the pre-pits regions PPR on the layer L1 and those on the layer L2 are superimposed.

In the present embodiment, the used land and groove structure is arranged such that substantially the same width is given to the lands and grooves, and that data is recorded in the form of the phase-changed recording marks on both the land and groove tracks. This structure can make the groove pitch twice as wide as the track pitch, thereby making the manufacturing of the disc and the tracking control easier.

In the case of the land and groove structure, a line of emboss pits on the land tracks LD and those on the groove tracks GV in the pre-pit regions are shifted from each other along the disc tangential direction. This is because the track pitch is as narrow as half the groove pitch, and it is difficult to form the emboss pits at the same pitch as the track pitch, and for a purpose to ensure the reliability of the address information by avoiding adverse affect from the crosstalk at the time of reproduction. Consequently, the mirror portions Mrr of the adjacent land track LD and groove track GV are formed at positions shifted from each other in the disc tangential direction.

Non-modulated, continuous, and long recording marks LMk are recorded in the mirror portions Mrr. If the recording marks LMk are continuous and long marks, even when crosstalk occurs due to the recorded recording marks at the time of reproduction from the emboss pits in the adjacent pre-pit region, the crosstalk takes a constant value. Hence, the crosstalk does not adversely affect the reading from the pre-pit regions at all. By recording the recording marks in the pre-pits regions in this manner, an approximately fifty-fifty area ratio is achieved between the recording marks and the spaces between the emboss pits in the pre-pits regions and rewritable regions. Hence, it is possible to eliminate a difference in transmittance between the pre-pits regions and rewritable regions in the recording layer at the irradiation side (for example, the layer 1). Consequently, it is possible to reproduce a signal precisely from the deep recording layer (for example, the layer 2).

In the case of Fig. 6, for example, given 20 µm as a film thickness of the spacer layer, 0.85 as the numerical aperture NA, and 1.6 as the refractive index n of the spacer layer, then, when the focus is achieved on the layer 2, the spot size on the layer 1 is a little less than 30 µm. Also, given 0.3 µ as the track pitch, then the pitch of the recording marks recorded in the pre-pits regions is 0.6 µm. Hence, the recording marks recorded in the pre-pits regions are not resolved at all, because the pitch of the recording marks is too narrow compared with the spot of a little less than 30 µm on the layer 1. Accordingly, it is possible to change only average transmittance (or reflectance).

The above description described that the non-recorded (crystal) portions have high reflectance, that is, low transmittance, and the recording marks (amorphous) portions have low reflectance, that is, high transmittance. It should be appreciated, however, that the opposite characteristics are also possible depending on the properties of the recording layers. More specifically, the non-recorded (crystal) portions may have low reflectance, that is, high transmittance, and the recording marks (amorphous) portions may have high reflectance, that is, low transmittance. In the present invention, a fact that these two portions have different reflectance or transmittance is important, and the same advantages can be achieved with either of these characteristics. The present invention is applied to a multi-layer disc provided with pre-pits regions having average reflectance different from average reflectance of the rewritable regions. To have different average reflectance means to have different average transmittance. Hence, the present invention can be also applied to a multi-layer disc provided with pre-pits regions having average transmittance different from average transmittance of the rewritable regions. The present invention is not limited to the land and groove structure, and can be applied flexibly to other types of discs provided with the pre-pits regions and rewritable regions without lands or grooves.

Further, the above description described the case where the recording marks are recorded in the mirror portions Mrr of the pre-pit regions. It should be appreciated, however, that the recording marks can be also recorded in, for example, spaces between the emboss pits or the periphery thereof, or further in a space between the adjacent tracks or between the pre-pit region and rewritable region in a direction intersecting at right angles with the tracks.

Also, the phase-changed recording marks in the amorphous state were used. However, as long as the structure can reduce the reflectance, a rough surface may be provided to the mirror portions of the pre-pit regions, so that the rough surface is used as the recording marks. By providing a rough surface beforehand to the pre-pit regions except for the emboss pits when a master disc or a stamper is manufactured, a recording operation of the recording marks for each disc can be simplified.

### (Recording and reproducing apparatus)

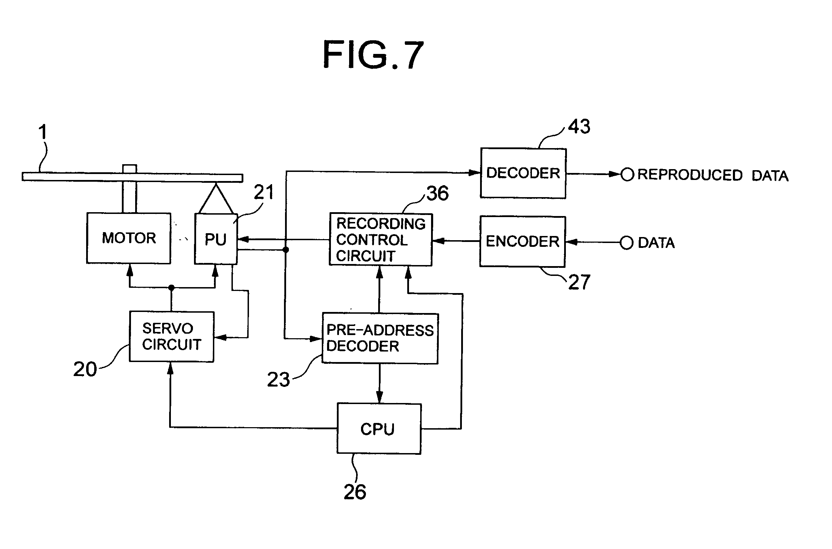

Fig. 7 is a block diagram showing an arrangement of a recording and reproducing apparatus of the present invention.

An optical pick-up 21 includes an optical system having a condenser lens, a beam splitter, an objective lens, and the like, a semiconductor laser serving as a light source, a photo-detector, an objective lens actuator, and the like. The optical pick-up 21 irradiates a beam of recording light or reading light to a multi-layer disc 1, and detects a beam of reflection light from the recording layers in the optical disc, whereby it reads a signal corresponding to the tracks and pre-pits or recording marks formed on the multi-layer disc 1. Here, to allow the beam of light to come into a sharp focus on the information recording surface of the multi-layer disc, the objective lens is controlled by the tracking servo and focus servo control. A servo circuit 20 performs the focusing and the tracking servo control of the pick-up, and controls the reproduction position (radius position) and the number of revolutions of the motor, and the like based on a control signal from the optical pick-up 21 and at a control command from a control unit (CPU) 26.

A read out signal (RF signal) outputted from the optical pick-up 21 is amplified by an amplifier circuit, and then supplied to a pre-address decoder 23 and a decoder 43.

The pre-pits or wobbling signals are extracted at the pre-address decoder 23, and a clock signal and a timing signal in synchronization with a revolution of the multi-layer disc 1 are generated by internal synchronizing clock and timing signal generating circuit. The timing signal represents a current position on the disc, such as a particular pre-pit region or rewritable region, or a particular land track or groove track on where recording (reproduction) is performed with a beam of light. The pre-address decoder 23 reads out address information from a signal read out by the pick-up from the emboss pits in the pre-pit regions on the disc, and sends the address information and timing signal to the CPU 26. The pre-address decoder 23 includes a circuit for detecting the rewritable regions and pre-pit regions on the multi-layer disc.

The CPU 26 detects the positions of the pre-pit regions on the recording layers from these signals. The CPU 26 is provided with an internal storage device or connected to an external storage device for storing necessary data. The CPU 26 controls the overall operation of the apparatus according to a signal supplied thereto. The CPU 26 reads out the address information from the pre-address decoder 23, and sends a control command to a recording control circuit 36 and the servo circuit 20, whereby it controls a recording or reproducing operation at a specified address.

The recording control circuit 36 controls the laser power from the pick-up depending on whether the current state is for the recording, erasing, or reproducing operation at a control command from the CPU 26 and based on the timing signal from the pre-address decoder 23. In the recording state, the laser power from the pick-up is modulated based on a signal from an encoder 27, so that information is recorded in the disc. In the reproducing state (in the case where data in the rewritable regions is reproduced or the address information in the pre-pit regions is reproduced), the reading power is controlled to stay at a constant low level, so that the information recorded on the disc will not be erased.

The encoder 27 encodes the recording data into a signal suitable to recording in the multi-disc 1 by, for example, appending a parity code for error correction and by converting the recording data into RLL (Run Length Limited) codes. The encoded signal is sent to the recording control circuit 36 from the encoder 27.

The decoder 43 applies processing (decoding RLL codes, error correction, etc.) to the signal read out from the rewritable regions on the disc in a reversed manner to the processing of the encoder, so that original record data is restored.

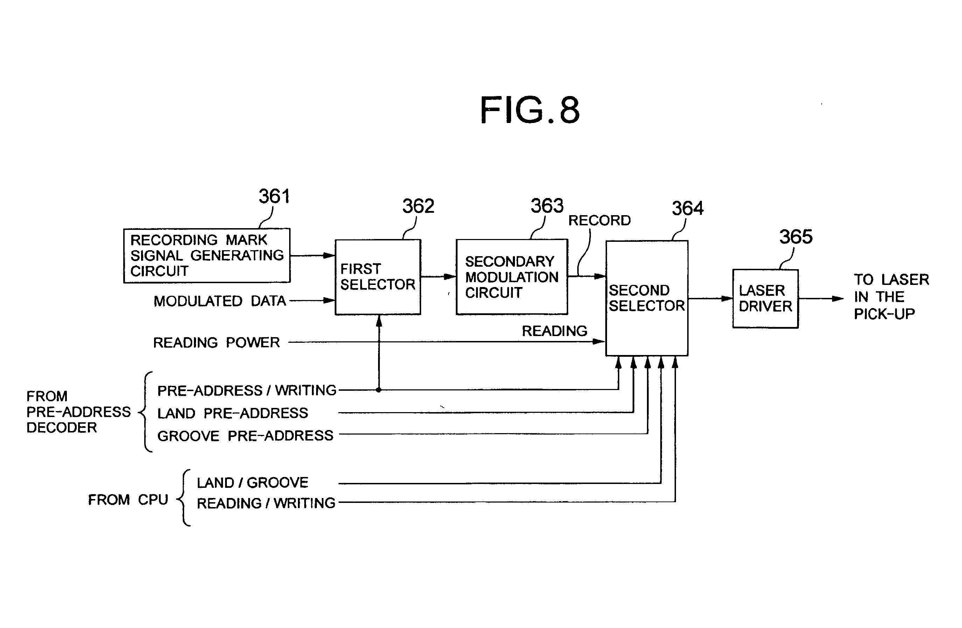

Fig. 8 is a block diagram showing an example of the recording control circuit 36.

A recording mark signal generating circuit 361 generates a non-modulated recording mark signal to be recorded in the pre-pit regions, and supplies the same to a first selector 362. The simplest example of the recording mark signal would be a signal that constantly outputs "1". The recording mark signal generating circuit 361 is a circuit that generates the recording mark signal for recording the recording mark of a predetermined length in the pre-pit region while a beam of light is irradiated on that pre-pit region.

In case that the timing signal from the pre-address decoder 23 indicates a pre-pit region, the first selector 362 selects the non-modulated recording mark signal, and in case that the timing signal indicates a rewritable region, the first selector 362 selects the encoded signal from the encoder 27, and the selected signal is sent to a secondary modulation circuit 363 where the selected signal is shaped into a pulse suitable to recording, so that the secondary modulated selected signal is supplied to a second selector 364 as a writing and recording signal. Besides the above recording signal, the second selector 364 is also supplied with a reproduction signal at the reading level from the secondary modulation circuit 363.

The second selector 364 selects the recording signal or reproduction signal based on the timing signal from the pre-address decoder 23 and at a control command from the CPU 26, and supplies a laser control signal to a laser driver 365, whereby the laser in the pick-up is controlled.

In case that the timing signal indicates (1) the reproducing state, (2) the recording state and the recording track is the land track and the mirror portion thereof, or (3) the recording state and the recording track is the groove track and the mirror portion thereof, the second selector 364 selects the reading power to control the laser power.

In a case other than above, the first selector 362 selects the secondary modulated encoded signal to control the laser power.

More specifically, in case that the timing signal at the first selector 362 indicates (4) the recording state and a rewritable region, (5) the recording state and the recording track is the land track and the mirror portion thereof, or (6) the recording state and the recording track is the groove track and the mirror portion thereof, a recording operation is performed.

The above description described the arrangement using two selectors 362 and 364 as one example of the recording control circuit. It should be appreciated, however, that the present invention is not limited to this arrangement, and the recording control circuit only has to control the laser to output a beam of laser at the reading power in any of the cases (1) through (3), and a beam of laser at the power controlled by the modulated signal based on the signal from the encoder in the case (4), and a beam of laser at the power controlled by the modulated signal based on the non-modulated recording mark signal in the case (5) or (6).

The present embodiment described the case where the recording marks are recorded in the pre-pits regions while recording in the rewritable regions is performed. However, the recording does not have to be performed simultaneously in the rewritable regions and in the pre-pit regions, and the disc may be initialized so that the recording marks are pre-recorded in the pre-pit regions alone.

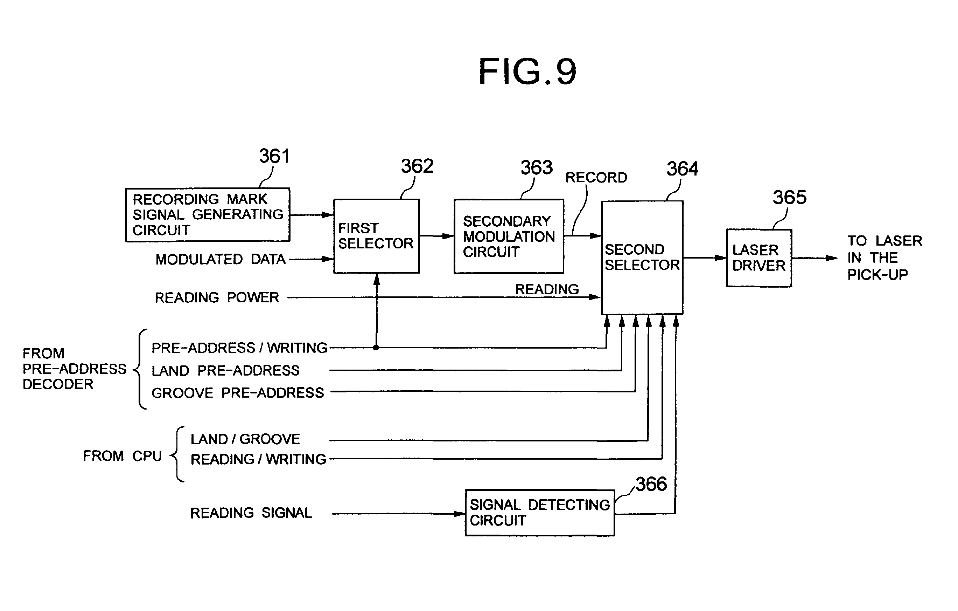

Fig. 9 is a view showing an example of the recording control circuit for preventing over-recording in the pre-pit regions.

An information recording medium of the phase change type has characteristics that the recording layers are deteriorated as signals are recorded repetitively on the same spot. For this reason, when data is recorded in the rewritable regions, deterioration of the recording layers is prevented by taking a measure to shift the recording start position on a random basis for each recording. However, in the case of recording in the pre-pit regions, because the recording position is limited to, for example, the mirror portions of the land tracks or groove tracks in the pre-pit regions, it is impossible to take the measure to shift the recording start position on a random basis for each recording, and the recording layer in the pre-pit regions, that is, the mirror portions, may possibly be deteriorated.

In order to solve the problem, the recording control circuit of Fig. 9 for preventing over-recording prevents deterioration in the mirror portions on the recording layer. That is, it detects whether any recording mark is recorded in the pre-pit regions, and if so, it does not record the recording marks in the pre-pit regions. The recording control circuit for preventing over-recording is identical with the recording control circuit of Fig. 8 except that it is additionally provided with a signal detecting circuit 366. The signal detecting circuit 366 has a circuit for detecting portions, for example, the mirror portions, which make average reflectance of the pre-pit regions different from average reflectance of the rewritable regions.

For instance, assume that the recording is performed simultaneously in the rewritable regions and in the pre-pit regions (that is, when the recording in the rewritable regions ends immediately before the pre-pit region, the recording is continued to the following pre-pit region), whether the recording mark is already recorded in the pre-pit region can be determined by checking whether the recording marks are recorded in the preceding rewritable region.

The presence or absence of the recording marks in the rewritable regions can be readily checked with the signal detecting circuit 366 by, for example, detecting amplitude of a read out reproduction signal supplied thereto and checking whether the detected amplitude is larger or smaller than the predetermined level. When it is determined that the recording mark is already recorded from the detection result, a signal is sent to the second selector 364, which controls the laser power to stay at the reading power in the pre-pit region so as not to perform the recording.
Consequently, it is possible to prevent deterioration of the recording layer resulted from repetitive over-writing on the same spot in the mirror portions of the pre-pit regions. When it is determined that the recording mark is not recorded, like in the example of Fig 8, it is controlled in such a manner that the recording mark is recorded in the pre-pit region. The operations other than the control based on the detection result are the same as those of the example of Fig. 8, and the description is not repeated for ease of explanation. The recording control circuit for preventing over-recording as discussed above has the circuit for detecting the recording marks already recorded in the pre-pit regions, and thereby forms a circuit that controls the optical pick-up to record the recording mark in the pre-pit region when the recorded recording mark is not detected therein, and controls the optical pick-up not to over-write the recording mark in the pre-pit region when the recorded recording mark is detected therein.

The above example discussed the case where the presence and absence of the recorded recording marks are determined from the reproduction signal. It should be appreciated, however, that the present invention is not limited to the above example, and it may be arranged such that an address up to where the recording has been performed is recorded in a predetermined region in the disc, and the recording of the recording marks in the pre-pit regions is controlled by reading out the recorded address.

### (Comparison between the multi-layer discs of the example and a comparative example)

The following description will describe an operation of the multi-layer disc by way of comparison between operation waveforms of the multi-layer disc of the example and those of a multi-layer disc of a comparative example. The multi-layer disc of the comparative example is identical with the double-layer disc shown in Fig. 5 except that no recording marks LMk are recorded therein.

### (Operation waveforms in the example)

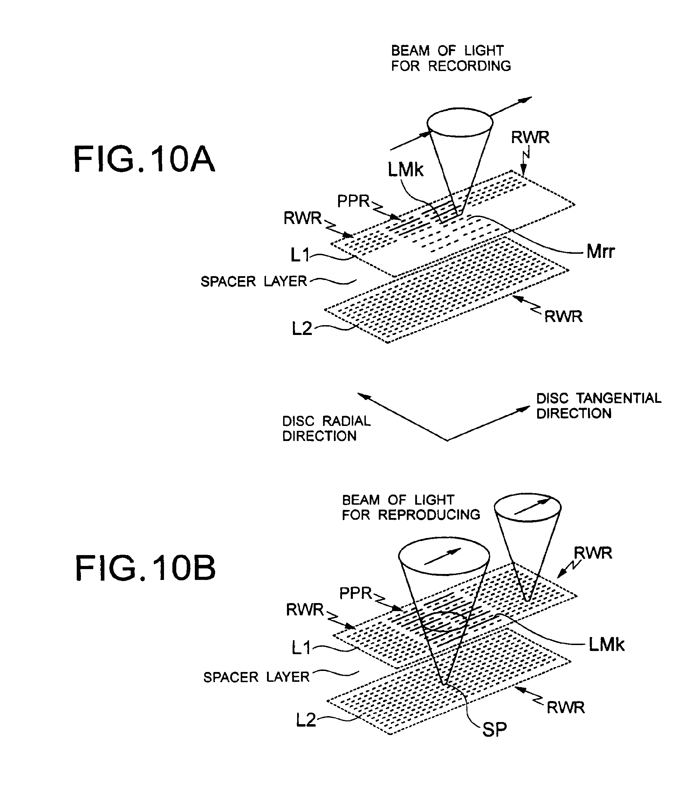

Here, a recording and reproducing apparatus having the above-described recording control circuit is used, and as shown in Fig. 10A, a beam of light is focused on the layer 1 in a double-layer disc of the land and groove structure in a non-recorded state, and reproduction from the emboss pits in the pre-pit regions PPR is performed in the disc tangential direction. After then, two types of predetermined recording, that is, recording in the rewritable regions RWR, and recording in the mirror portions of the groove tracks and land tracks in the pre-pit regions PPR (that is, forming continuous long recording marks LMk in the mirror portions), are performed. As shown in Fig. 10B, when these two types of recording end, a beam of light is focused on each recording layer and reproduction from the layer L1, and further, reproduction from the layer L2 are performed. Here, a beam of light covers both the rewritable region and pre-pit region on the layer 1, but assume that it is not the case on the layer 2 and data is reproduced from the rewritable regions alone.

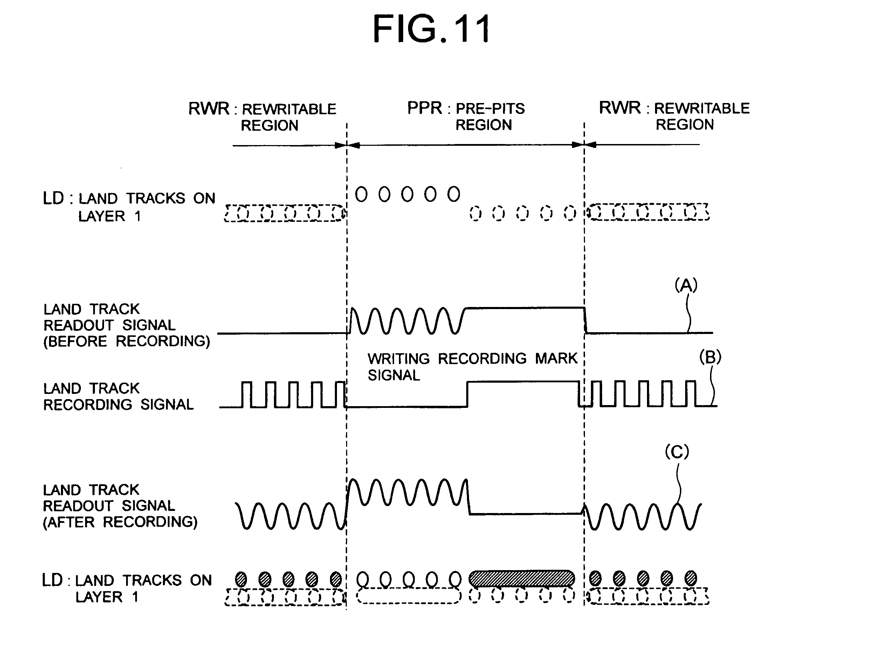

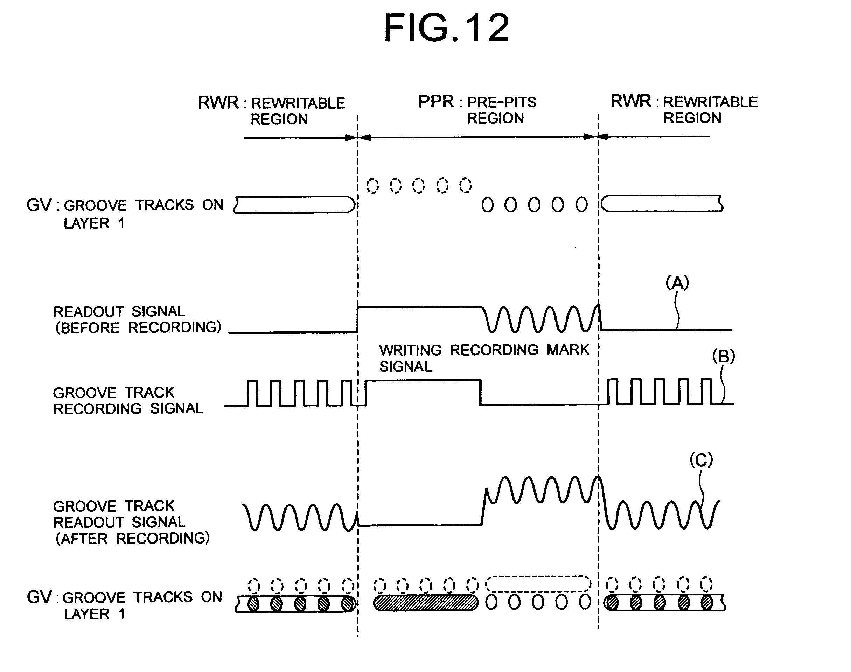

The following description will describe a recording waveform and reproducing operation waveforms before and after the recording by referring to a focus jump from a rewritable region to a pre-pit region and to a rewritable region. Fig. 11 shows waveforms from the land tracks on the layer 1, and Fig. 12 shows waveforms from the groove tracks on the layer 1.

A waveform (A) in Fig. 11 and a waveform (A) in Fig. 12 represent reproduction signals before the recording from a multi-layer disc in the non-recorded state. Because a beam of reproducing light is diffracted by the lands (or grooves) in the rewritable regions, reflectance is lower than in the mirror portions. Hence, the reproduction signal before the recording has a constant signal level (non-recording level) slightly lower than a signal level (mirror level) reproduced from the mirror portions.

A signal modulated between the mirror level and non-recording level by the emboss pits is reproduced from a line of the emboss pits in the land tracks or groove tracks in the pre-pit regions. Because no emboss pits are provided to the mirror portions of the land tracks or groove tracks in the pre-pit regions, a reproduction signal therefrom has the mirror level.

A waveform (B) in Fig. 11 and a waveform (B) in Fig. 12 represent recording waveforms. Data (recording marks) is recorded into the rewritable regions by modulating the intensity of a beam of light according to the recording data. In the pre-pit regions, a beam of light with constant intensity too weak to perform recording is irradiated to read out the address information from the emboss pits, and at the same time, a non-modulated writing recording mark signal (always outputting "1") with a long pulse width is supplied before or after the emboss pits in accordance with the mirror portions of the land (groove) tracks in the pre-pit regions.

A waveform (C) in Fig. 11 and a waveform (C) in Fig. 12 represent reproduction signals after the recording. Because the reflectance of the recording marks is lowered in the rewritable regions, the resulting reproduction signal is modulated between a signal level (recording level) lower than the non-recording level and the non-recording level in space portions (mirror portions) between the recording marks. Because the recording marks are recorded in the mirror portions of the pre-pit regions, the resulting level (mirror portion recording level) is lowered by a change in reflectance of crystal and amorphous.

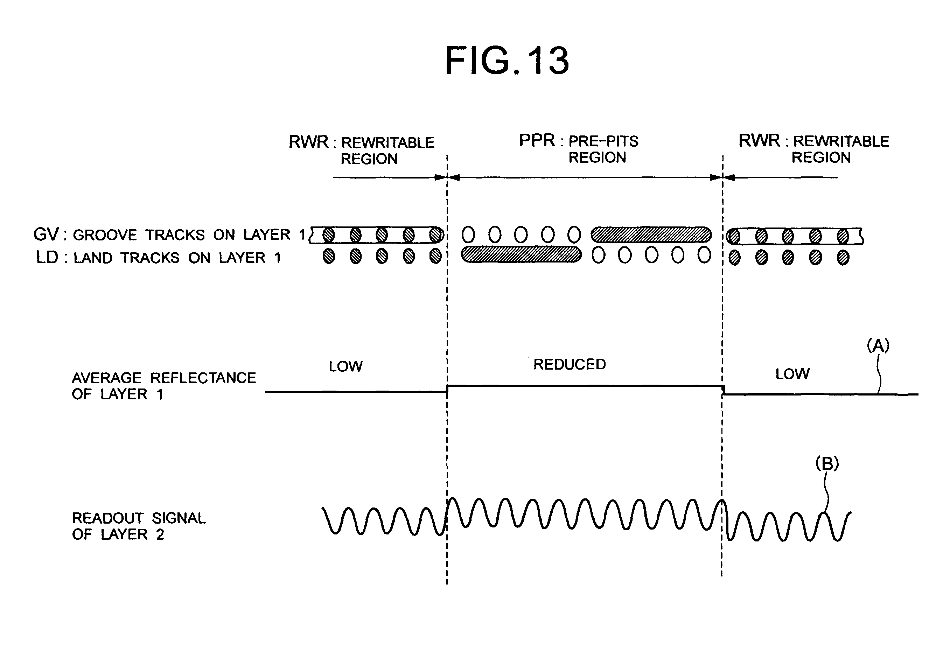

Fig. 13 shows operation waveforms when a signal recorded in the rewritable regions on the layer 2 is reproduced after the recordings is performed in the layer 1 in the manner as shown in Figs. 11 and 12 by focusing a beam of light on the layer 2 at the same position as the recording position on the layer 1.

A waveform (A) of Fig. 13 represents average reflectance of the layer 1. Because the focal point is on the layer 2, the spot size on the layer 1 is far larger than the recording mark size and the track pitch, so that the recording marks or spaces, or land tracks or groove tracks are not resolved. Hence, reflectance of the layer 1 by the light spot takes an average value of the emboss pits and the mirror portions in the pre-pit regions, and the readout signal therefrom takes an average value of a readout signal from the land tracks (a signal after the recording represented by the waveform (C) in Fig. 11) and a readout signal from the groove tracks (a signal after the recording represented by the waveform (C) in Fig. 12). Thus, reflectance of the layer 1 by the light spot takes an intermediate value between the recording level and non-recording level in the rewritable regions, but in the pre-pit regions, it takes an intermediate level between the mirror level and an average signal level of the emboss pit portions (an intermediate level between the mirror level and non-recording level).

The pre-pit regions no longer cause a significant difference in reflectance with respect to the rewritable regions. This is because the recording marks of amorphous having low reflectance are provided in the mirror portions of the pre-pit regions, and average reflectance of the entire pre-bit regions is lowered. Accordingly, even if reflection light from the layer 1 leaks into reflection light from the layer 2 at the time of reproduction from the rewritable regions on the layer 2, a reproduction signal from the rewritable regions on the layer 2 shapes the waveform represented by the waveform (B) in Fig. 13, and therefore, can be reproduced precisely.

Up to the above, explanation has been made for the influence from the pre-pit regions on the layer 1 at the time of reproduction from the rewritable regions on the layer 2. It should be noted, however, that the same can be said as to the affect from the pre-pit regions on the layer 2 at the time of reproduction from the rewritable regions on the layer 1. In the case of reproduction from the layer 2, however, reproduction is susceptible not only to the reflection light from the layer 1, but also to the above-discussed change in transmittance of the layer 1, whereas in the case of reproduction from the layer 1, because a beam of light does not pass through the layer 2, the reproduction is unsusceptible to such a change in transmittance of the layer 2.

### (Operation of a comparative example)

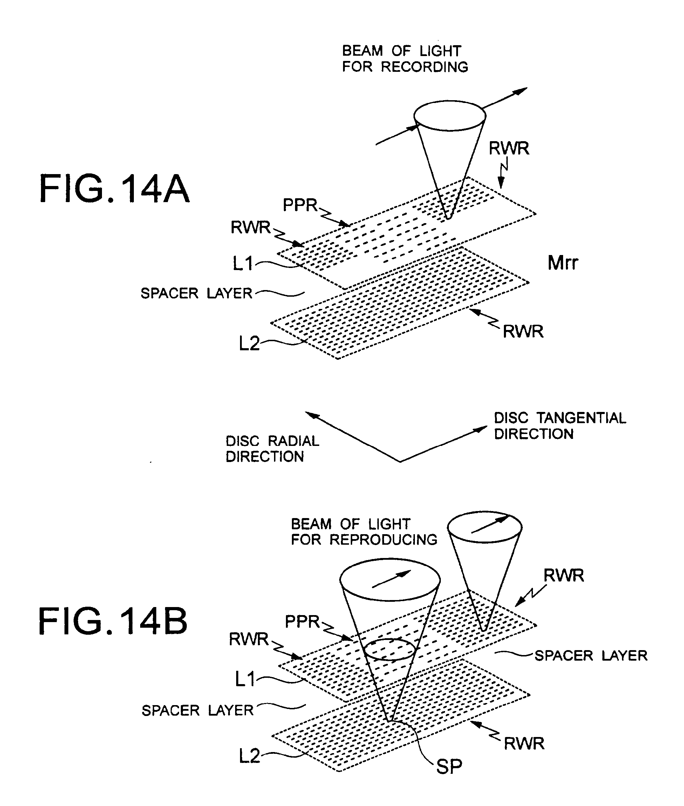

An apparatus having the above-described recording control circuit is used, and as shown in Fig. 14A, a beam of light is focused on the layer 1 of a double-layer disc of the land and groove structure in the non-recorded state, and reproduction from the emboss pits in the pre-pit regions PPR is performed in the disc tangential direction. Subsequently, predetermined recording, that is, recording into the rewritable regions RWR is performed. Here, the operation is the same as that of the above example except that the recording is not performed in the mirror portions of the groove tracks and land tracks in the pre-pits regions PPR. After the recording, as shown in Fig. 14B, a beam of light is focused on each recording layer, and reproduction from L1, and further, reproduction from L2 are performed.

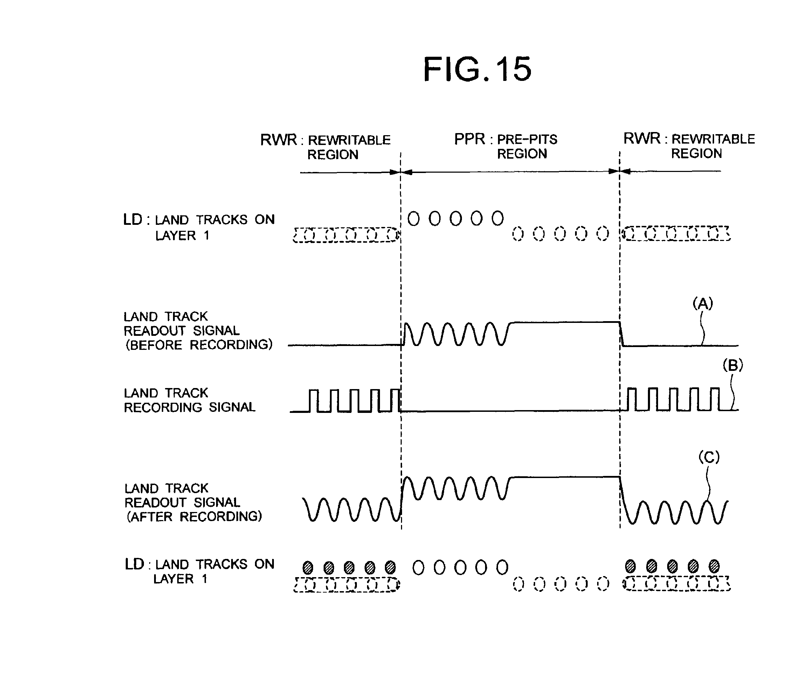

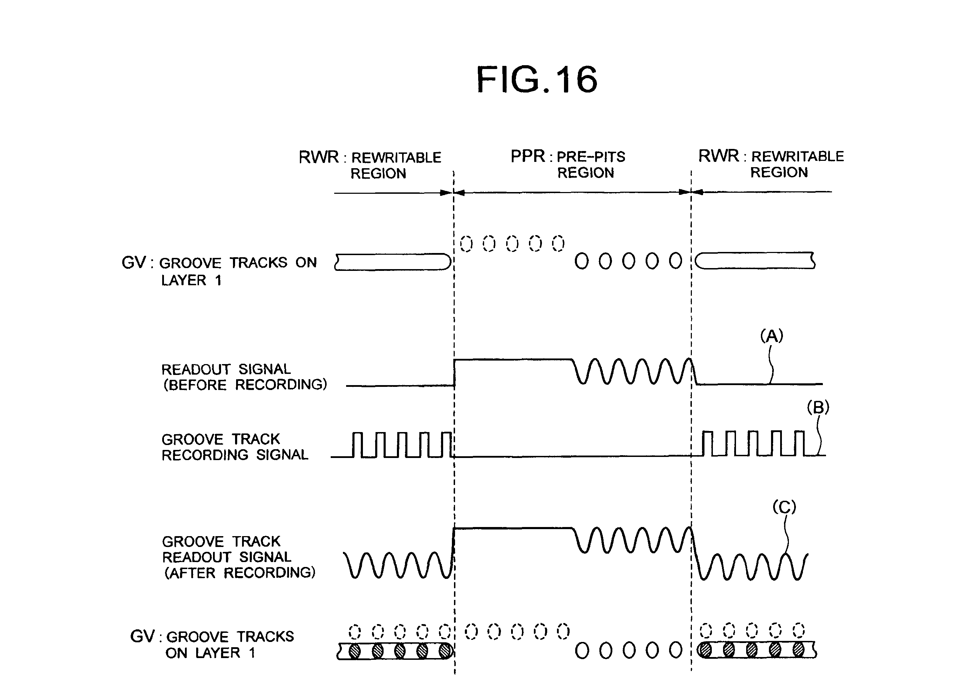

The following description will describe a recording waveform and reproducing operation waveforms before and after the recording by referring to a focus jump from a rewritable region to a pre-pit region and to a rewritable region. Fig. 15 shows waveforms from the land tracks on the layer 1, and Fig. 16 shows waveforms from the groove tracks on the layer 1.

A waveform (A) in Fig. 15 and a waveform (A) in Fig. 16 represent reproduction signals before the recording, and they are identical with the reproduction signals before the recording in the example represented by the waveform (A) of Fig. 11 and the waveform (A) of Fig. 12, respectively.

A waveform (B) in Fig. 15 and a waveform (B) in Fig. 16 represent waveforms of recording signals, and they are identical with the waveforms of the recording signals represented by the waveform (B) of Fig. 11 and the waveform (B) of Fig. 12, respectively, except that a non-modulated recording mark LMk signal is not provided before or after the emboss pits.

A waveform (C) in Fig. 15 and a waveform (C) in Fig. 16 represent reproduction signals after the recording. As is in the example, because the reflectance of the recording marks is lowered in the rewritable regions, the resulting reproduction signal is modulated between the level (recording level) lower than the non-recording level and the non-recording level in space portions between the recording marks. Because nothing but the emboss pits is recorded in the pre-pit regions, a signal therefrom has a level between the mirror portion level and the level between the mirror portion level and the non-recording level, each being the same as their counterparts in the reproduction signal before the recording.

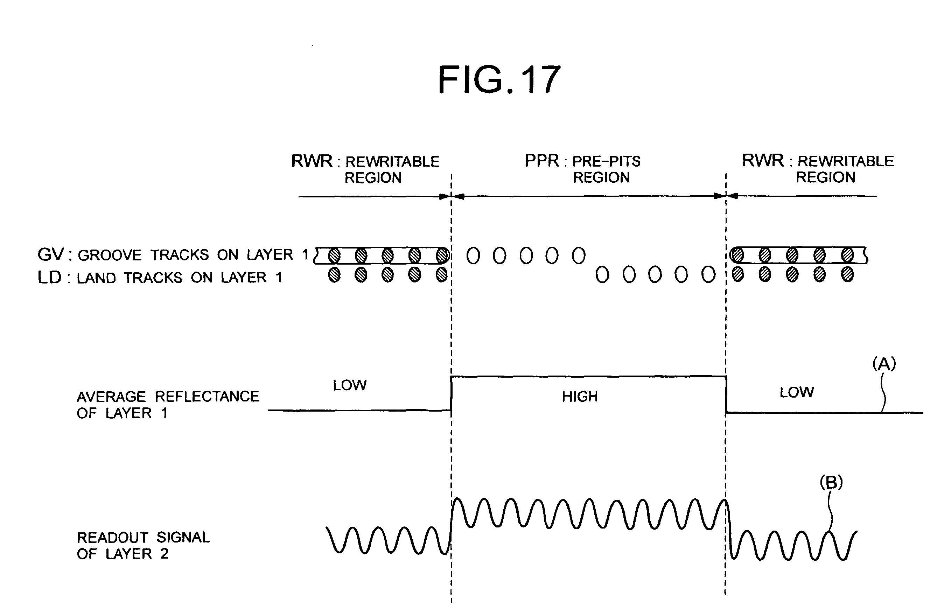

Fig. 17 shows waveforms when a signal recorded in the rewritable regions on the layer 2 is reproduced after the recording is performed in the layers 1 in the manner as shown in Figs. 15 and 16 by focusing a beam of light on the layer 2 at the same position as the recording position on the layer 1.

A waveform (A) of Fig. 17 represents average reflectance of the layer 1. Different from the example, the pre-pit regions have the mirror level except at the emboss pits in the comparative example. Hence, a signal from the layer 1 at the rewritable regions takes an intermediate value between the recording level and the non-recording level like in the example, but a signal from the pre-pit regions takes an intermediate level between the mirror portion recording level and an average level of the regions (an intermediate level between the mirror level and non-recording level). Accordingly, the pre-pit regions have reflectance far larger than that of the rewritable regions, which causes a significant difference in reflectance. Thus, reflection light from the layer 1 leaks into reflection light from the layer 2 at the time of reproduction from the rewritable regions on the layer 2, and a reproduction signal from the rewritable regions on the layer 2 shapes the waveform (B) of Fig. 17, which makes precise reproduction impossible.

The above comparison reveals that, according to the present invention, even if the positions of the pre-pit regions on the adjacent recording layers are shifted from each other, at the time of recording into (reproduction from) the rewritable regions, the transmittance of the recording layers does not change whether the current spot is on the pre-pit regions or rewritable regions. This prevents a change in quantity of light passing through the recording layer at the irradiation side and arriving the deep recording layer, thereby making precise recording possible. Also, in the case of reproduction from the deep recording layer, neither a quantity of light arriving the deep recording layer (in the incoming path), nor a quantity of light reflected from the deep recording layer and passing through the recording layer at the irradiation side again (in the return path) changes. This makes it possible to reproduce a signal from the deep recording layer precisely.

Even when reflection light from the other layer leaks into reflection light from one layer at the time of reproduction therefrom, average intensity of reflection light from the other layer does not change between the pre-pit regions and rewritable regions. Consequently, by removing low frequency components in the reproduction signal through a high-pass filter or the like, it is possible to remove adverse affect of leakage of a signal from the other layer (inter-layer crosstalk), thereby making precise reproduction possible.

The above description described the improvement to the adverse affect of the pre-pit regions on the layer 1 in the case of reproduction from the rewritable regions on the layer 2. It should be appreciated, however, that the adverse affect of the pre-pit regions on the layer 2 in the case of reproduction from the rewritable regions on the layer 1 can be improved in the same manner. Further, in the case of reproduction from the layer 2, not only can the adverse affect of the reflection light from the layer 1, but also the adverse affect of a change in transmittance of the layer 1 can be improved as has been discussed above.

## Claims

1. A multi-layer information recording medium capable of recording/rewriting information, comprising a plurality of recording layers sequentially layered through spacer layers, each recording layer being made of a material that changes reflectance upon irradiation of a beam of light and thereby being capable of recording information as a change in reflectance,
each of said plurality of recording layers being provided with alternately and adjacently aligned information rewritable regions and pre-pit regions where predetermined information has been written, average reflectance of said rewritable regions being different from average reflectance of said pre-pits regions,
wherein said pre-pit regions have recording marks that lessen a difference between the average reflectance of said rewritable regions and the average reflectance of said pre-pit regions.

2. The multi-layer information recording medium according to claim 1, wherein each of said pre-pit regions is composed of a mirror portion and a portion provided with emboss pits.

3. The multi-layer information recording medium according to claim 2, wherein said emboss pits carry address information.

4. The multi-layer information recording medium according to claim 1, wherein each of said plurality of recording layers includes land tracks and groove tracks.

5. The multi-layer information recording medium according to claim 1, wherein each of said recording layers includes a medium layer made of a phase change material.

6. The multi-layer information recording medium according to claim 1, wherein said multi-layer information recording medium has a disc shape and said pre-pits regions are provided in a spokes-wise fashion from a center of the disc.

7. The multi-layer information recording medium according to claim 1, wherein said recording medium has a disc shape and said pre-pit regions are provided periodically in a disc tangential direction.

8. The multi-layer information recording medium according to claim 2, wherein a line of emboss pits in each of adjacent tracks are provided at a different position in a disc tangential direction.

9. The multi-layer information recording medium according to claim 1, wherein each of the recording marks recorded in said pre-pits regions is a non-modulated continuous recording mark.

10. A recording apparatus for recording/rewriting information by irradiating a beam of light to a multi-layer information recording medium capable of recording/rewriting information and comprising a plurality of recording layers sequentially layered through spacer layers, wherein each of said recording layers is made of a material that changes reflectance upon irradiation of a beam of light and thereby is capable of recording information as a change in reflectance, each of said plurality of recording layers is provided with alternately and adjacently aligned information rewritable regions and pre-pit regions where predetermined information has been written, and average reflectance of said rewritable regions is different from average reflectance of said pre-pits regions,
said recording apparatus including a circuit for generating a recording mark signal for recording a recording mark of a predetermined length in each of said pre-pit regions while the beam of light is irradiated on the pre-pit region.

11. The recording apparatus according to claim 10, further comprising a circuit for detecting said rewritable regions and said pre-pit regions.

12. The recording apparatus according to claim 10, further comprising a circuit for detecting a portion that makes the average reflectance of said pre-pit regions different from the average reflectance of said rewritable regions.

13. The recording apparatus according to claim 10, further comprising:
a circuit for detecting the recording marks already recorded in said pre-pit regions; and
a circuit for, when no recorded recording marks are detected, controlling an optical pick-up to record the recording marks in said pre-pit regions, and when the recorded recording marks are detected, controlling the optical pick-up not to over-write the recording marks in said pre-pit regions.

14. The recording apparatus according to claim 10, wherein a non-modulated continuous recording mark is recorded in a portion having a higher reflectance than the average reflectance of said pre-pit regions.
